# EUROPÄISCHE PATENTSCHRIFT

(11) **EP 1 788 027 B1**
(45) Veröffentlichungstag und Bekanntmachung des Hinweises auf die Patenterteilung: **18.07.2007**
(21) Anmeldenummer: 05025216.2
(22) Anmeldetag: 18.11.2005
(51) Int. Cl.: C08L 77/06, C08L 77/10, C08K 7/06, C08K 7/14

(54) **Verstärkte Polyamidformmassen**
Reinforced polyamide moulding compositions
Compositions de moulage renforcées à base de polyamide

(43) Veröffentlichungstag der Anmeldung: 23.05.2007
(73) Patentinhaber: EMS-Chemie AG, 7013 Domat/Ems (CH)
(72) Erfinder: Rexin, Ornulf Dr.rer.nat., 7013 Domat/EMS (CH); Linster, Jean-Jacques Dr.sc.tech., 7000 Chur (CH); Hewel, Manfred Dr.rer.nat.Dipl.Chem., 7013 Domat/EMS (CH)
(74) Vertreter: Becker Kurig Straus

(56) Entgegenhaltungen:
- EP-A- 0 957 131
- WO-A-02/40591
- DE-A1- 4 321 247
- PATENT ABSTRACTS OF JAPAN Bd. 016, Nr. 076 (C-0914), 25. Februar 1992 (1992-02-25) & JP 03 269056 A (MITSUBISHI KASEI CORP), 29. November 1991 (1991-11-29)

## Beschreibung

Die vorliegende Erfindung betrifft verstärkte Polyamidformmassen, die aus einem Polyamidblend und beispielsweise durch Compoundierung mit geschnittenen oder Endlosfasern auf Zweischneckenextrudern herstellbar sind und mechanische Eigenschaften aufweisen, welche normalerweise nicht miteinander vereinbar sind, nämlich eine Kombination von außergewöhnlich hoher Steifigkeit und Festigkeit bei gleichzeitig guter Zähigkeit. Weiterhin wird erfindungsgemäß eine hohe Wärmeformbeständigkeit (HDT) erzielt.

Die erfindungsgemäßen, thermoplastischen Polyamidformmassen eignen sich zur Herstellung von Formkörpern oder anderen Halbzeugen oder Fertigteilen, die z. B. durch Extrusion, Spritzguss, Direktverfahren bzw. Direktcompounding, bei dem die compoundierte Polyamidformmasse direkt durch Spritzguss verarbeitet wird oder anderen Verformungstechniken herstellbar sind.

Verstärkte Polyamidblends spielen eine zunehmende Rolle im Bereich der technischen Konstruktionswerkstoffe, da sie neben hoher Steifigkeit, eine gute Zähigkeit und Wärmeformbeständigkeit zeigen. Einsatzgebiete sind, z. B. Innen- und Außenteile im Automobilsektor und im Bereich von anderen Transportmitteln, Gehäusematerial für Geräte und Apparate für die Telekommunikation, Unterhaltungselektronik, Haushaltsapparate, Maschinenbau, Heizungsbereich und Befestigungsteile für Installationen.

Der besondere Vorteil von verstärkten Polyamiden liegt im außergewöhnlich guten Verbund zwischen Polymermatrix und Verstärkungsstoffen. Dies gilt auch bei hohen Verstärkungsgraden, die zu hochsteifen Produkten führen. Die Zähigkeit dieser Produkte genügt allerdings nicht allen Anforderungen.

Im folgenden sollen unter Polyamiden solche Polymere verstanden werden, die sich von Dicarbonsäuren, Diaminen, Aminocarbonsäuren und/oder Lactamen herleiten. Es kann sich dabei um Homo- oder Copolyamide handeln. Das Zahlenmittel des Molekulargewichts der Polyamide sollte über 5000, vorzugsweise über 10.000 liegen.

JP 07-097514 (Asahi) beschreibt Polyamidharzzusammensetzungen als Isolationsmaterial für elektrische Schiebeschalter. Das dabei angestrebte Eigenschaftsprofil umfasst folgende Eigenschaften: Dimensionsstabilität, HDT, Kriechstromfestigkeit, Lichtbogenfestigkeit, Oberflächenrauhigkeit, Oberflächenglanz, Ablagerungen im Werkzeug bei der Formgebung, Gleiteigenschaften, Fliessfähigkeit. Besonderer Wert wird dabei auf die elektrischen Eigenschaften, die Oberflächenqualität und die Gleiteigenschaften gelegt. Das als Matrix verwendete Polyamid-Blend (40 bis 70 Gew.-%) setzt sich aus (a1) einem Copolyamid aus 55 bis 95 Gew.-% 66- und 5 bis 45 Gew.-% 6I- und/oder 6-Einheiten und (a2) 0 bis 50 Gew.-% eines aliphatischen Polyamids (PA), ausgewählt aus PA 6, PA 66, PA 11, PA 12, PA 610, PA 612, PA 46 sowie als Füllstoff (30 bis 60 Gew.-%) eine Mischung aus Fasern und Mineralien (Gewichtsverhältnis 1,0 oder tiefer), ausgewählt aus Glasfasern, Carbon- bzw. Kohlenstofffasern, Glimmer, Talkum, Kaolin, Wollastonit, Calciumcarbonat, Magnesiumoxid oder Kaliumtitanat. In den Beispielen werden als Komponente (a1) Copolyamid 66/6I oder Copolyamid 66/6 und als Komponente (a2) PA 66, PA66/6, PA612 oder PA6 verwendet. Die in den Beispielen erzielten Reissfestigkeiten liegen zwischen 1070 kg/cm² und 1800 kg/cm², umgerechnet also zwischen 105 MPa und 176 MPa. Die erzielten HDT A Werte liegen zwischen 210°C und 241°C.

JP 03-269056 (Mitsubishi) beschreibt ganz allgemein in den Patentansprüchen Polyamidformmassen aus (A) Polyamid 6 oder Polyamid 66 in Kombination mit einem Copolyamid aus (Ba) aliphatischem Diamin, Isophthalsäure und Terephthalsäure (60 bis 100% (Ba)) und (Bb) Lactam und/oder aliphatischem Diamin und aliphatischer Dicarbonsäure (0 bis 40% (Bb)), Füllstoff (C) und als Komponente (D) gesättigte aliphatische Carbonsäuren und/oder ein Metallsalz davon. Für die Mengenverhältnisse gelten gemäß JP 03-269056 die Bedingungen (A) + (B) = 40 bis 95%, (C) = 3 bis 60%, (D) = 0,005 bis 1% und ein Verhältnis von (B)/(A) von 0,01 bis 0,025, wobei (B) = (Ba) + (Bb). Allerdings werden gemäß den in den Beispielen der JP 03-269056 gearbeiteten praxisnahen Rezepturen als aliphatisches Polyamid entweder Polyamid 66 oder Polyamid 6 eingesetzt, während als semi-aromatisches Polyamid ein Polyamid 6I/6T (Gewichtsverhältnis 66,7/33,3) bzw. ein Polyamid 6I/6T/6 (Gewichtsverhältnis 62,6/31,3/6,1) verwendet wird. Als Füllstoff wird ausschließlich Glasfaser, gegebenenfalls in Kombination mit Wollastonit eingesetzt, wobei der Höchstgehalt an Füllstoff 40 Gew.-% ist (vgl. Beispiele 2 und 3). Gemäß der JP 03-269056 sollen Formmassen bereitgestellt werden, die ein hervorragendes thermisches und mechanisches Verhalten haben und auch gute Oberflächeneigenschaften zeigen, d. h. keine Verformung oder Einsackstellen in den Formkörpern ergeben. Mit der Verwendung von 6I/6T wird gemäß der JP 03-269056 (vgl. Beispiel 2) allerdings nur ein HDT/A von 241°C sowie ein HDT/C von 150°C erzielt (Nachstellung durch den Erfinder siehe Vergleichsbeispiel 11). Es ergeben sich außerdem Reissfestigkeiten von umgerechnet 182 bzw. 185 MPa (vgl. Beispiele 2 und 3).

Aufgabe der vorliegenden Erfindung ist es daher, hochsteife und gleichzeitig zähe, verstärkte Polyamidformmassen mit hohen Wärmeformbeständigkeiten (HDT) bereitzustellen, so dass für einen bestimmten Füllstoffgehalt mechanische Eigenschaften resultieren, die normalerweise nicht miteinander vereinbar sind.

Diese Aufgabe wird durch das faserverstärkte Polyamidblend gemäß Anspruch 1 gelöst, mit einer Polyamidmatrix aus einem Blend aus Polyamid 66 (Homopolyamid) und einem Copolyamid (CoPA) 6T/6I (B) sowie als Verstärkungsmaterial eine Mischung aus Glasfasern und Carbon- bzw. Kohlenstofffasern. Um eine weitere Erhöhung der Steifigkeit zu erhalten wurde erfindungsgemäß ein Teil der Glasfasern durch Carbonfasern ersetzt, so dass ein Hybridfaserverstärkter Compound zum Einsatz kommt.

Die Aufgabe wird weiterhin gelöst durch das Verfahren zur Herstellung der Formmassen gemäß Anspruch 12 oder 13, die Verwendung wird gemäß Anspruch 14, die Herstellung der Formkörper gemäß Anspruch 15, sowie durch die Formkörper gemäß Anspruch 16 gelöst.

In den Unteransprüchen sind vorteilhafte, aber nicht ausschließliche Ausführungsformen der Erfindung enthalten.

Die erfindungsgemäßen Polyamidformmassen sind daher hochsteife und gleichzeitig zähe, verstärkte Polyamidformmassen mit hoher Wärmeformbeständigkeit (HDT), als Polyamidmatrix enthaltend ein Blend aus den folgenden Komponenten:
(A) Polyamid 66,
(B) Copolyamid, aufgebaut aus
   (b₁) 50 bis 80 Gew.-Teile Einheiten, insbesondere 50 bis 70 Gew.-Teile Einheiten, welche sich von Terephthalsäure (T) in Kombination mit Hexamethylendiamin (6) in nahezu äquimolarem Verhältnis ableiten,
   (b₂) 50 bis 20 Gew.-Teile Einheiten, insbesondere 50 bis 30 Gew.-Teile Einheiten, welche sich von Isophthalsäure (I) in Kombination mit Hexamethylendiamin in nahezu äquimolarem Verhältnis ableiten,
      wobei die Gewichtsteile der Komponenten (b₁) und (b₂) zusammen 100 Gew.-Teile ergeben,
   und als Füllstoffkomponente enthaltend eine Mischung aus:
(C) Glasfasern und
(D) Carbon- bzw. Kohlenstofffasern,
wobei die Gewichtsprozente der Komponenten (A) bis (D) zusammen 100% ergeben und
wobei die Komponenten (A), (B), (C) und (D) die folgenden Bedingungen erfüllen:

| | |
|---|---|
| (A) + (B): | 20 bis 60 Gew.-%, insbesondere 20 bis 39 Gew.-%, |
| Gewichtsverhältnis (A)/(B): | 50/50 bis 95/5, |
| (C) + (D): | 40 bis 80 Gew.-%, |
| Gewichtsverhältnis (C)/(D): | 80/20 bis 95/5, |

wobei die Polyamidformmassen gegebenenfalls zusätzlich zu den Komponenten (A) bis (D) Zusatzstoffe (E) enthalten, und wobei deren Menge additiv zur Summe der Komponenten (A) bis (D) ist.

In besonderen Ausführungsformen der Erfindung beträgt die Menge an Füllstoff, d.h. an Glasfasern und Carbon- bzw. Kohlenstofffasern, 61 bis 75 Gew.-%, besonders bevorzugt 64 bis 75 Gew.-%, ganz besonders bevorzugt 66 bis 75 Gew.-%.

Die erfindungsgemäß erzielten mechanischen und thermischen Eigenschaften der verstärkten Formmassen umfassen Reissfestigkeiten von über 230 MPa (gemessen an Norm-Prüfkörpern gemäß ISO 527), Reissdehnungen von über 1,5% (gemessen an Norm-Prüfkörpern gemäß ISO 527), Wärmeformbeständigkeitswerte HDT/A (1,8 MPa) (gemessen nach ISO 75) von über 242°C, bevorzugt von mindestens 245°C, HDT/C (8 MPa) (gemessen nach ISO 75) von über 150°C, bevorzugt von über 170°C.

Als Copolyamid wird erfindungsgemäß ein Copolyamid 6T/6I (Komponente (B)) eingesetzt. Von besonderer Bedeutung ist dabei das Verhältnis von Polyamid 6T/6I zum Anteil Polyamid 66.

Durch Einstellung des Verhältnisses 6T > 6I kann der Schmelzpunkt und der HDT angehoben werden. Das Copolyamid 6T/6I weist eine relative Viskosität (RV) gemessen in 0,5%iger m-Kresol-Lösung von zwischen 2,3 und 2,7, bevorzugt von zwischen 2,4 und 2,6 auf.

Die erfindungsgemäß als Füllstoffkomponente (C) eingesetzten Glasfasern weisen vorzugsweise einen Durchmesser von 5 bis 20 µm, bevorzugt von 5 bis 10 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z.B. A-, C-, D-, M-, S-, R-Glasfasern oder beliebige Mischungen davon oder Mischungen mit E-Glasfasern eingesetzt werden.

Die erfindungsgemäßen Formmassen können aber auch weitere Zusatzstoffe (E), wie z. B. aus der Gruppe der anorganischen Stabilisatoren, organischen Stabilisatoren, Gleitmittel, Farbstoffe, metallischen Pigmente, Metallflitter, metallbeschichtete Partikel, halogenhaltigen Flammschutzmittel, halogenfreien Flammschutzmittel, Schlagzähmodifikatoren, Antistatika, Leitfähigkeitsadditive, Entformungsmittel, optischen Aufheller, natürlichen Schichtsilikate, synthetischen Schichtsilikate oder Gemische der genannten Zusatzstoffe enthalten.

Als Antistatika können in den erfindungsgemäßen Formmassen z. B. Ruß und/oder Kohlenstoffnanoröhrchen eingesetzt werden.

Die Verwendung von Russ zusätzlich zu den vorhandenen Carbonfasern kann aber auch der Verbesserung der Schwarzfärbung der Formmasse dienen.

Als Schichtsilikate können in den erfindungsgemäßen Formmassen, z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

Als Stabilisatoren bzw. Alterungsschutzmittel können in den erfindungsgemäßen Formmassen, z.B. Antioxidantien, Antiozonantien, Lichtschutzmittel, UV-Stabilisatoren, UV-Absorber oder UV-Blocker eingesetzt werden.

Bei der vorliegenden Erfindung handelt es sich somit um ein faserverstärktes Polyamidblend mit mechanischen Eigenschaften, welche normalerweise nicht miteinander vereinbar sind, nämlich einer Kombination aus außergewöhnlich hoher Steifigkeit und hohem HDT bei gleichzeitig guter Zähigkeit. Überraschenderweise hat sich gezeigt, dass dies durch die Kombination zweier Maßnahmen erreicht werden kann: die Zugabe eines teilaromatischen Copolyamides 6T/6I und die Verwendung von Carbon- bzw. Kohlenstofffasern zusätzlich zu Glasfasern. Es kommt also ein hybridfaserverstärkter Compound zum Einsatz, wobei sich ein Gehalt von 15 bis 30 Gew.-% PA 66, 4 bis 17 Gew.-% CoPA 6T/6I, 61 bis 65 Gew.-% Glasfaser und 5 bis 9 Gew.-% Carbonfaser als besonders bevorzugte Zusammensetzung sowohl bezüglich mechanischer Eigenschaften als auch Wirtschaftlichkeit für die erfindungsgemäße Formmasse ergeben hat. Die Gewichtsprozente addieren sich dabei zu 100%. Die Menge etwaiger Zusatzstoffe ist additiv zu diesen 100 %.

In einer Ausführungsform der Erfindung bei einem Gesamtfasergehalt von 66 bis 74 Gew.-% zeigen die Formmassen einen Zug-E-Modul von über 25500 MPa, bevorzugt von über 27000 MPa, besonders bevorzugt von über 28000 MPa und insbesondere eine Reissdehnung von mindestens 1,6%.

Die Reissdehnung der erfindungsgemäßen Formmassen mit einem Gesamtfasergehalt von 66 bis 74 Gew.-% kann bevorzugt mindestens 1,7%, besonders bevorzugt mindestens 1,8% betragen.

Insbesondere beträgt die Schlagzähigkeit (Charpy New, 23 °C) der erfindungsgemäßen Formmassen mit einem Gesamtfasergehalt von 66 bis 74 Gew.-% mindestens 50 kJ/m², bevorzugt mindestens 60 kJ/m², besonders bevorzugt mindestens 70 kJ/m².

In einer anderen Ausführungsform der Erfindung weisen die erfindungsgemäßen Formmassen mit einem Füllstoffgehalt (Gesamtfasergehalt) von 46 bis 54 Gew.-% einen Zug-E-Modul von über 18000 MPa, bevorzugt von über 19000 MPa, besonders bevorzugt von über 20000 MPa und insbesondere eine Reissdehnung von mindestens 2,0% auf.

Besonders bevorzugt beträgt die Reissdehnung der erfindungsgemäßen Formmassen mit einem Gesamtfasergehalt von 46 bis 54 Gew.-% mindestens 2,3%, ganz besonders bevorzugt mindestens 2,5%.

Die Schlagzähigkeit (Charpy New, 23 °C) der erfindungsgemäßen Formmassen mit einem Gesamtfasergehalt von 46 bis 54 Gew.-% beträgt insbesondere mindestens 65 kJ/m², bevorzugt mindestens 80 kJ/m², besonders bevorzugt mindestens 90 kJ/m².

Die Werte des Zug-E-Moduls sind stark vom Gesamtfasergehalt, dem Mischungsverhältnis Glas/Carbonfaser und dem Mischungsverhältnis der beiden Polyamide PA66 und PA6T/6I abhängig.

Gerade hochverstärkte Compounds sind normalerweise sehr spröde und in der praktischen Anwendung unbrauchbar. Überraschenderweise hat sich gezeigt, dass Blendkombinationen möglich sind, welche dem Compound trotz hohen Fasergehaltes, sehr hoher Steifigkeit und hohem HDT eine außergewöhnlich gute Zähigkeit, d.h. Reissdehnung bzw. Schlagzähigkeit verleihen.

Es hat sich erfindungsgemäß gezeigt, dass insbesondere eine Mischung aus einem aliphatischen PA 66 mit einer relativen Viskosität zwischen 2,3 und 2,7 (0,5% in m-Kresol) und einem teilaromatischen CoPA 6T/6I im Verhältnis 70:30 eine besonders bevorzugte Kombination aus extrem hoher Steifigkeit, guter Zähigkeit und hohem HDT aufweist. Letztendlich wird erfindungsgemäß ein Produkt mit noch metallähnlicheren Eigenschaften als bisherige glasfaserverstärkte Materialien offenbart.

Eine noch höhere Zähigkeit und somit eine noch metallähnlichere Eigenschaft kann bei Verwendung speziell dünner Glasfasern mit einem Durchmesser unter 10 µm erreicht werden.

Die Herstellung der erfindungsgemäßen Polyamidformmassen kann auf üblichen Compoundiermaschinen, wie z. B. ein- oder zweiwelligen Extrudern oder Schneckenknetern erfolgen. In der Regel wird zunächst der polymere Anteil aufgeschmolzen und das Verstärkungsmaterial (Glasfasern und Carbon- bzw. Kohlenstofffasern) kann an der gleichen Stelle oder an verschiedenen Stellen des Extruders, z.B. mittels eines Sidefeeders eingetragen werden. Die Compoundierung erfolgt bevorzugt bei eingestellten Zylindertemperaturen von 280°C bis 320°C. Der polymere Anteil und das Verstärkungsmaterial können aber auch gemeinsam in den Einzug dosiert werden.

Die erfindungsgemäßen Polyamidformmassen können des weiteren durch Pulltrusionsverfahren hergestellt werden, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat kann mit den üblichen Verarbeitungsverfahren zu Formteilen weiterverarbeitet werden.

Der aus erfindungsgemäßen Formmassen hergestellte Polymerstrang kann mit allen bekannten Granulierungsverfahren zu Granulat verarbeitet werden, wie z. B. durch Stranggranulierung, bei der der Strang in einem Wasserbad abgekühlt und anschließend geschnitten wird. Ab einem Fasergehalt von mehr als 60 Gew.-% empfiehlt sich zur Verbesserung der Granulatqualität die Verwendung einer Unterwassergranulierung bzw. Heißabschlags unter Wasser, bei der die Polymerschmelze direkt durch eine Lochdüse gedrückt und von einem rotierenden Messer in einem Wasserstrom granuliert wird.

Eine weitere Möglichkeit der Herstellung der erfindungsgemäßen Formmassen ist das Vermischen von Granulaten mit z.B. unterschiedlichen Matrices und/oder Füllstoffen zu einem Dryblend, welches anschließend weiterverarbeitet wird. Beispielsweise kann zunächst aus den Komponenten (A) und/oder (B) und den Füllstoffen (C) und/oder (D) und gegebenenfalls dem Zusatzstoff (E) jeweils ein Compound in Granulatform hergestellt und diese Granulate anschließend zu einem Dryblend vermischt werden, gegebenenfalls unter Zugabe noch weiterer Granulatmengen von Komponente (A) und/oder (B). Das auf diese Weise hergestellte Dryblend wird anschließend weiterverarbeitet (vergleiche Anspruch 13).

Die homogenisierte Granulatmischung (Dryblend) wird in einer Verarbeitungsmaschine, z.B. einer Schneckenspritzgussmaschine zu hybridfaserverstärkten Formkörpern und/oder Hohlkörpern verarbeitet, wobei weitere Granulatmengen an Komponente (A) und/oder (B) hinzugefügt werden kann.

Mit der Verarbeitung eines Dryblends können tendenziell bessere mechanische Eigenschaften erzielt werden. Das Mischen des Dryblends verursacht allerdings einen zusätzlichen Herstellungsschritt, welcher die Produktkosten erhöht und damit die Wirtschaftlichkeit verschlechtert. Außerdem kann es durch Vibrationen beim Transport zu einer Entmischung kommen, bedingt durch den Dichteunterschied der verschiedenen Granulatsorten.

Die aus den erfindungsgemäßen Formmassen hergestellten Formkörper werden zur Herstellung von Innen- und Außenteilen, vorzugsweise mit tragender oder mechanischer Funktion im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, Unterhaltungselektronik, Haushaltsapparate, Maschinenbau, Heizungsbereich, oder Befestigungsteile für Installationen oder für Behälter und Lüftungsteile aller Art eingesetzt.

Als mögliche Anwendungen für die aus den erfindungsgemäßen Formmassen hergestellten Formkörpern ist vor allem der Bereich des Metalldruckgussersatz zu nennen, bei dem eine extrem hohe Steifigkeit in Kombination mit einer guten Zähigkeit erwartet wird.

### Verarbeitungsverfahren

Neben den üblichen Verarbeitungsverfahren, wie Extrusion oder Spritzguss kommen auch folgende Verarbeitungsverfahren in Frage
- Co/Bi-Injektion oder Montagespritzguss für Hybridteile, bei denen die erfindungsgemäße Polyamidformmasse mit anderen kompatiblen oder inkompatiblen Werkstoffen, wie z.B. Thermoplasten, Duroplasten oder Elastomeren kombiniert wird.
- Insertteile, wie z.B. Lagerstellen oder Gewindeeinsätze aus der erfindungsgemäßen Polyamidformmasse, umspritzt mit anderen kompatiblen oder inkompatiblen Werkstoffen, wie z.B. Thermoplasten, Duroplasten oder Elastomeren.
- Outsertteile, wie Rahmen, Gehäuse oder Stützen aus der erfindungsgemäßen Polyamidformmasse, in welche Funktionselemente aus anderen kompatiblen oder inkompatiblen Werkstoffen, wie z.B. Thermoplasten, Duroplasten oder Elastomeren eingespritzt werden.
- Hybridteile (Elemente aus der erfindungsgemäßen Polyamidformmasse kombiniert mit anderen kompatiblen oder inkompatiblen Werkstoffen, wie z.B. Thermoplasten, Duroplasten oder Elastomeren) hergestellt durch Verbundspritzguss, Spritzschweißen, Montagespritzguss, Ultraschall-, Reib- oder Laserschweißen, Kleben, Börteln oder Nieten.
- Halbzeuge und Profile (z.B. hergestellt durch Extrusion, Pulltrusion, Schichtung oder Lamination)
- Oberflächenbeschichtung, Kaschierungen, chemisches- oder physikalisches Metallisieren, Beflockung, wobei die erfindungsgemäße Polyamidformmasse das Substrat selbst oder der Substratträger oder bei Hybrid/Bi-Injektionsteilen ein definierter Substratbereich sein kann, welcher auch durch nachträgliche chemische (z.B. Ätzen) oder physikalische Behandlung (z.B. spanabhebend oder LASER-Abtrag) zur Oberfläche gebracht werden kann.
- Bedrucken, Transferdruck, 3-D Druck, Laserbeschriften.

### Anwendungen

### Bereich Elektrogeräte

- Anschlag- und/oder Justierelemente für Elektrohandwerkzeuge mit oder ohne integrierten elektrischen Funktionen (moulded interconnect devices, MID)
- Pleuel und/oder Kolben für Bohrhammer in homogener Ausführung, also aus einem Material oder als Hybridteil, also aus einer Materialkombination
- Gehäuse, Getriebegehäuse für Winkelschleifer, Bohrmaschinen, Elektrohobel oder Schleifmaschinen mit oder ohne integrierten elektrischen Funktionen (MID) in homogener Ausführung oder als Hybridteil, wobei bestimmte Funktionsbereiche (z.B. Kraftübertragungsflächen, Gleitflächen, Dekor-Sichtbereiche, Griffbereich) aus einem anderem kompatiblen oder inkompatiblen (z.B. für gezielte Delamination bzw. Deformation, Sollbruchstelle, Kraft- bzw. Drehmomentbegrenzung) Werkstoff sein können.
- Werkzeugaufnahmen, z.B. Futter und/oder Fixierungen
- Nähmaschinengehäuse, Schiebetische mit oder ohne integrierten elektrischen Funktionen (MID)

### Bereich Sanitär- und Hygiene

- Gehäuse und/oder Funktionselemente (z.B. für Pumpen, Getriebe, Ventile) für Mundduschen, Zahnbürsten, Komforttoiletten, Duschzellen, Hygienecenter mit oder ohne integrierten elektrischen Funktionen (MID) in homogener Ausführung oder als Hybridteil

### Bereich Haushaltsgeräte

Gehäuse und/oder Funktionselemente für mechanische, elektrische oder elektro-mechanische Schließsysteme, Verriegelungssysteme oder Sensoren mit oder ohne integrierten elektrischen Funktionen (MID) für
- Kühlschränke, Kühltruhen, Gefriertruhen
- Backöfen, Herde, Dampfgarer
- Geschirrspülmaschinen

### Bereich Automobil

Gehäuse und/oder Halterungen mit oder ohne integrierten elektrischen Funktionen (MID) in homogener Ausführung oder als Hybridteil für
- Bedienungselemente/Schalter (z.B. für Außenspiegelverstellung, Sitzpositionsverstellung, Beleuchtung, Fahrtrichtungsanzeiger)
- Innensensoren, z.B. für Sitzbelegung
- Außensensoren (z.B. für Einparkhilfen, Abstandsmesser mit Ultraschall bzw. mit Radar)
- Sensoren im Motorraum (z.B. Schwingungs- bzw. Klopfsensoren)
- Innen- und Außenbeleuchtung.
- Motoren und/oder Antriebselemente im Innen und Außenbereich (z.B. für Sitzkomfortfunktionen, Außenrückspiegelverstellung, Hauptscheinwerferverstellung und/oder Nachführung, Kurvenlicht)
- Kontroll- und/oder Steuerungssysteme für den Fahrzeugantrieb (z.B. für Medienführung und/oder Regelung von z.B. Treibstoff, Luft, Kühlmittel, Schmiermittel) Mechanische Funktionselemente und/oder Sensorengehäuse mit oder ohne integrierten elektrischen Funktionen (MID) für
- Schließsysteme, Verriegelungen, Zuziehsysteme, z.B. bei Fahrzeugschwenktüren, Schiebetüren, Motorraumklappen bzw. -hauben, Heckklappen, Fahrzeugfenstern

### Maschinenbau

- ISO-Normteile und/oder Maschinenelemente (z.B. Schrauben, Muttern, Bolzen, Keile, Wellen, Zahnräder) in Normmassen oder anwendungsspezifischem Design oder homogener Ausführung
- ISO-Normteile und/oder Maschinenelemente, wie z.B. Schrauben, Muttern, Bolzen, Keile, Wellen in Normmassen oder anwendungsspezifischem Design oder als Hybridteil, wobei bestimmte Funktionsbereiche, wie z.B. Kraftübertragungsflächen, Gleitflächen, Dekor-Sichtbereiche aus einem anderem kompatiblen oder inkompatiblen (z.B. für gezielte Delamination, Sollbruchstelle, Kraft/Drehmomentbegrenzung) Werkstoff sein können.
- Ständer, Standfüße, Sockel für Bearbeitungsmaschinen, wie z.B. Standbohrmaschinen, Tischbohrmaschinen, Fräsmaschinen oder Kombimaschinen für Metall- und/oder Holzbearbeitung
- Insertteile, z.B. Gewindebüchsen
- Selbstfurchende Schrauben

### Bereich Energie- und Antriebstechnik:

- Rahmen, Gehäuse, Trägerteile (Substrat) und/oder Befestigungselemente für Solarzellen mit oder ohne integrierten elektrischen Funktionen (MID) in homogener Ausführung oder als Hybridteil.
- Nachführ- und/oder Justierelemente (z.B. für Lager, Scharniere, Gelenke, Zugstangen, Stossstangen) für Kollektoren.
- Pumpengehäuse und/oder Ventilgehäuse mit oder ohne integrierten elektrischen Funktionen (MID) in homogener Ausführung oder als Hybridteil.

### Bereich Medizinalequipment

- Rahmen, Gehäuse, Trägerteile mit oder ohne integrierten elektrischen Funktionen (MID) in homogener Ausführung oder als Hybridteil für Überwachungsgeräte und/oder Equipment zur Unterstützung der Lebensfunktionen.
- Einwegbestecke, wie z.B. Scheren, Klemmen, Zangen, Messergriffe in homogener Ausführung oder als Hybridteil
- Konstruktionen zur kurzzeitigen bzw. notfallmäßigen Fixierung von Frakturen in homogener Ausführung oder als Hybridteil
- Gehhilfen mit oder ohne integrierten elektrischen Funktionen (MID) und/oder Sensoren zur Belastungskontrolle in homogener Ausführung oder als Hybridteil.

### Bereich Sanitär

- Pumpengehäuse, Ventilgehäuse oder Wasserzählergehäuse mit oder ohne integrierten elektrischen Funktionen (MID) in homogener Ausführung oder als Hybridteil.

Die folgenden Beispiele sollen die Erfindung erläutern, ohne sie jedoch einzuschränken.

### Beispiele

Die in den Beispielen und Vergleichsbeispielen verwendeten Materialien sind in Tabelle 1 charakterisiert.

**Tabelle 1**

| **Material** | **Handelsname** | **relative Viskosität 20°C m-Kresol, 0,5%-ig** | **Zusammensetzung Gew.-%** | **Hersteller** |
|---|---|---|---|---|
| PA66 | Radipol A45 | 2,7 in H₂SO₄, 1%-ig | -- | Radici Chimica, Italien |
| PA6T/6I | XE 3733 NK | 1,56 | 70/30 | EMS-CHEMIE AG, Schweiz |
| GF | Vetrotex EC10-4,5MM 99B | --- | --- | Saint-Gobain Vetrotex, Frankreich |
| CF | Tenax HTA 5N51 6M | --- | --- | Toho Tenax Europe GmbH, Deutschland |
| PA6I/6T | GRIVORY G21 | 1,52 | 2/1 | EMS-CHEMIE AG, Schweiz |
| PA6 | GRILON A23 | 2,47 in H₂SO₄, 1%-ig | -- | EMS-CHEMIE AG, Schweiz |

| | | | | |
|---|---|---|---|---|
| GF Glasfaser CF Carbon- bzw. Kohlenstofffaser | | | | |

Die Formmassen der Zusammensetzungen in Tabelle 2 werden auf einem Zweiwellenextruder der Fa. Werner u. Pfleiderer Typ ZSK25 hergestellt. Die Granulate PA 66 und PA 6T/6I werden in die Einzugszone dosiert. Die Glasfaser wird wie die Kohlenstofffaser über einen Sidefeeder 3 Gehäuseeinheiten vor der Düse in die Polymerschmelze dosiert.

Die Gehäusetemperatur wurde als aufsteigendes Profil bis 310°C eingestellt. Bei 150 bis 200 upm wurden 10 kg Durchsatz verwendet. Nach Abkühlen der Stränge im Wasserbad wurden nach Granulierung und Trocknung bei 120°C für 24h die Granulateigenschaften gemessen.

Die Prüfkörper wurden auf einer Arburg Spritzgießanlage hergestellt, wobei die Zylindertemperaturen von 310°C bis 320°C und eine Scheckenumfangsgeschwindigkeit von 15 m/min eingestellt wurden. Die Formtemperatur wurde mit 110°C gewählt.

Die mechanischen Eigenschaften Zug-E-Modul, Reissfestigkeit und Reissdehnung wurden durch Zugprüfung an Norm-Prüfkörpern gemäß ISO 527 bestimmt. Die Messung der Schlagzähigkeit (SZ) wurde nach Charpy bei 23°C gemäß ISO 179/2-1eU durchgeführt.

Die Bestimmung des HDT/A (1,8 MPa) und HDT/C (8 MPa) wurde nach ISO 75 vorgenommen.

**Tabelle 2**

| **Beispiele** | | **Nr.** | | | | | | | | | |
|---|---|---|---|---|---|---|---|---|---|---|---|
| **Eigenschaft** | | **1** | **2** | **3** | **4** | **5** | **6** | **7** | **8** | **9** | **10** |
| PA66 | Gew.-% | 25 | 33 | 25 | 33 | 18 | 22,7 | 18 | 24 | 16 | 20 |
| PA6T/61 | Gew.-% | 25 | 17 | 25 | 17 | 14 | 7,3 | 12 | 6 | 14 | 10 |
| Glasfaser | Gew.-% | 42 | 42 | 43,5 | 43,5 | 58 | 62 | 62 | 64 | 64 | 64 |
| Carbonfaser | Gew.-% | 8 | 8 | 6,5 | 6,5 | 10 | 8 | 8 | 6 | 6 | 6 |
| Zug-E-Modul | MPa | 20500 | 20000 | 19100 | 19400 | 28800 | 28600 | 28800 | 28300 | 28200 | 28300 |
| Reissfestigkeit | MPa | 250 | 250 | 250 | 250 | 240 | 260 | 250 | 245 | 245 | 245 |
| Reissdehnung | % | 2,5 | 2,5 | 2,5 | 2,5 | 1,8 | 1,8 | 1,8 | 1,7 | 1,8 | 1,7 |
| Schlag Charpy | | | | | | | | | | | |
| New 23°C | kJ/m2 | 80 | 90 | 90 | 95 | 65 | 70 | 70 | 60 | 60 | 65 |
| HDT A | °C | 245 | 255 | 245 | 245 | 245 | 245 | 245 | 245 | 245 | 245 |
| HDT C | °C | 185 | 190 | 185 | 200 | 215 | 215 | 215 | 195 | 200 | 195 |

**Tabelle 3**

| **Vergleichsbeispiele** | | **Nr.** | | | | | |
|---|---|---|---|---|---|---|---|
| **Eigenschaft** | | **11** | **12** | **13** | **14** | **15** | **16** |
| PA66 | Gew.-% | 50 | 37 | | 28 | | 23 |
| PA6T/6I | Gew.-% | | | 50 | | | |
| PA6I/6T | Gew.-% | 10 | 12 | | 10 | | 7 |
| PA6 | Gew.-% | | | | | 35 | |
| Glasfaser | Gew.-% | 40 | 50 | 50 | 60 | 65 | 70 |
| Zug-E-Modul | MPa | 14000 | 17000 | 17600 | 20000 | 22600 | 25000 |
| Reissfestigkeit | MPa | 215 | 250 | 250 | 250 | 210 | 240 |
| Reissdehnung | % | 2,8 | 2,5 | 2,0 | 2,2 | 1,6 | 1,5 |
| Schlag Charpy | | | | | | | |
| New 23°C | kJ/m2 | 65 | 90 | 80 | 70 | 45 | 60 |
| HDT A | °C | 240 | 235 | 285 | 235 | 210 | 240 |
| HDT C | °C | 150 | 165 | 210 | 175 | 180 | 190 |

Die erfindungsgemäßen Beispiele 1 bis 10 zeigen gegenüber den Vergleichsbeispielen 11 bis 16 bei entsprechendem Füllstoffgehalt ein ausgewogeneres Eigenschaftsprofil, d. h. eine ausgewogenere Kombination von hohem Zug-E-Modul und hohem HDT bei gleichzeitig guter Reissdehnung.

Die Formmasse des Vergleichsbeispiels 13 mit 50 Gew.-% Füllstoff zeigt zwar sehr hohe HDT-Werte, hat aber einen deutlich tieferen Zug-E-Modul und eine deutlich tiefere Reissdehnung als die Formmassen der erfindungsgemäßen Beispiele 1 bis 4.

Die Formmasse des Vergleichsbeispiels 16 mit 70 Gew.-% Füllstoff liegt in allen Messwerten unterhalb der Formmassen der erfindungsgemäßen Beispiele 6 bis 10.

Besonders gute mechanische Eigenschaften erhält man bei der Verwendung von speziell dünnen Glasfasern mit einem Durchmesser von unter 10 µm. Auf diese Weise lässt sich vor allem die Zähigkeit des Materials um bis zu 15% erhöhen.

## Patentansprüche

1. Hochsteife und gleichzeitig zähe, verstärkte Polyamidformmassen, **gekennzeichnet durch:** Wärmeformbeständigkeitswerte HDT/A (1,8 MPa) (gemessen nach ISO 75) von über 242°C, insbesondere von mindestens 245 °C, HDT/C (8 MPa) von über 150°C, insbesondere von über 170°C, sowie eine Polyamidmatrix, enthaltend ein Blend aus den folgenden Komponenten:
(A) Polyamid 66,
(B) Copolyamid, aufgebaut aus
(b₁) 50 bis 80 Gew.-Teile Einheiten, insbesondere 50 bis 70 Gew.-Teile Einheiten, welche sich von Terephthalsäure (T) in Kombination mit Hexamethylendiamin (6) in nahezu äquimolarem Verhältnis ableiten,
(b₂) 50 bis 20 Gew.-Teile Einheiten, insbesondere 50 bis 30 Gew.-Teile Einheiten, welche sich von Isophthalsäure (I) in Kombination mit Hexamethylendiamin in nahezu äquimolarem Verhältnis ableiten,
wobei die Gewichtsteile der Komponenten (b₁) und (b₂) zusammen 100 Gew.-Teile ergeben,
und eine Füllstoffkomponente, enthaltend eine Mischung aus:
(C) Glasfasern und
(D) Carbon- bzw. Kohlenstofffasern,
wobei die Gewichtsprozente der Komponenten (A) bis (D) zusammen 100% ergeben und wobei die Komponenten (A), (B), (C) und (D) die folgenden Bedingungen erfüllen:
| | |
|---|---|
| (A) + (B): | 20 bis 60 Gew.-%, |
| Gewichtsverhältnis (A)/(B): | 50/50 bis 95/5, |
| (C) + (D): | 40 bis 80 Gew.-%, |
| Gewichtsverhältnis (C)/(D): | 80/20 bis 95/5, |
wobei die Polyamidformmassen gegebenenfalls zusätzlich zu den Komponenten (A) bis (D) Zusatzstoffe (E) enthalten, und wobei deren Menge additiv zur Summe der Komponenten (A) bis (D) ist.

2. Polyamidformmassen gemäß Anspruch 1, als Polyamidmatrix enthaltend ein Blend aus den folgenden Komponenten:
(A) Polyamid 66,
(B) Copolyamid, aufgebaut aus
(b₁) 50 bis 80 Gew.-Teile Einheiten, insbesondere 50 bis 70 Gew.-Teile Einheiten, welche sich von Terephthalsäure (T) in Kombination mit Hexamethylendiamin (6) in nahezu äquimolarem Verhältnis ableiten,
(b₂) 50 bis 20 Gew.-Teile Einheiten, insbesondere 50 bis 30 Gew.-Teile Einheiten, welche sich von Isophthalsäure (I) in Kombination mit Hexamethylendiamin in nahezu äquimolarem Verhältnis ableiten,
wobei die Gewichtsteile der Komponenten (b₁) und (b₂) zusammen 100 Gew.-Teile ergeben,
und als Füllstoffkomponente enthaltend eine Mischung aus:
(C) Glasfasern und
(D) Carbon- bzw. Kohlenstofffasern,
wobei die Gewichtsprozente der Komponenten (A) bis (D) zusammen 100% ergeben und wobei die Komponenten (A), (B), (C) und (D) die folgenden Bedingungen erfüllen:
| | |
|---|---|
| (A) + (B): | 20 bis 39 Gew.-%, |
| Gewichtsverhältnis (A)/(B): | 50/50 bis 95/5, |
| (C) + (D): | 61 bis 80 Gew.%, bevorzugt 61 bis 75 Gew.-%, besonders bevorzugt 64 bis 75 Gew.%, ganz besonders bevorzugt 66 bis 75 Gew.-%, |
| Gewichtsverhältnis (C)/(D): | 80/20 bis 95/5, |
wobei die Polyamidformmassen gegebenenfalls zusätzlich zu den Komponenten (A) bis (D) Zusatzstoffe (E) enthalten, und wobei deren Menge additiv zur Summe der Komponenten (A) bis (D) ist.

3. Polyamidformmassen gemäß einem der Ansprüche 1 oder 2, **gekennzeichnet durch** Reissfestigkeiten von über 230 MPa (gemessen an Norm-Prüfkörpern gemäß ISO 527) und gegebenenfalls Reissdehnungen von über 1,5% (gemessen an Norm-Prüfkörpern gemäß ISO 527).

4. Polyamidformmassen gemäß einem der vorhergehenden Ansprüche 1 bis 3, **gekennzeichnet durch** einen Gesamtfasergehalt von 66 bis 74 Gew.-%, einen Zug-E-Modul von über 25500 MPa, bevorzugt von über 27000 MPa, besonders bevorzugt von über 28000 MPa und gegebenenfalls eine Reissdehnung von mindestens 1,6%.

5. Polyamidformmassen gemäß einem der vorhergehenden Ansprüche 1 bis 4, **gekennzeichnet durch** einen Gesamtfasergehalt von 66 bis 74 Gew.-% und eine Reissdehnung von mindestens 1,7%, bevorzugt mindestens 1,8%.

6. Polyamidformmassen gemäß einem der vorhergehenden Ansprüche 1 oder 3, **gekennzeichnet durch** einen Gesamtfasergehalt von 46 bis 54 Gew.-%, einen Zug-E-Modul von über 18000 MPa, bevorzugt von über 19000 MPa, besonders bevorzugt von über 20000 MPa und gegebenenfalls eine Reissdehnung von mindestens 2,0%.

7. Polyamidformmassen gemäß einem der vorhergehenden Ansprüche 1 oder 6, **gekennzeichnet durch** einen Gesamtfasergehalt von 46 bis 54 Gew.-% und eine Reissdehnung von mindestens 2,3%, bevorzugt mindestens 2,5%.

8. Polyamidformmassen nach einem der vorhergehenden Ansprüche 1 bis 7, in denen das Copolyamid 6T/6I (Komponente (B)) eine relative Viskosität (RV), gemessen in 0,5%iger m-Kresol-Lösung, von zwischen 2,3 und 2,7, bevorzugt von zwischen 2,4 und 2,6, aufweist.

9. Polyamidformmassen gemäß einem oder mehreren der vorhergehenden Ansprüche 1 bis 8, in denen die Glasfasern (Komponente (C)) einen Durchmesser von 5 bis 20 µm, bevorzugt von 5 bis 10 µm aufweisen, wobei insbesondere der Querschnitt der Glasfasern rund, oval oder rechteckig ist, wobei E-Glasfasern bevorzugt sind.

10. Polyamidformmassen gemäß einem oder mehreren der vorhergehenden Ansprüche 1 bis 9, **dadurch gekennzeichnet, dass** als Zusatzstoff (E) solche aus der Gruppe der anorganischen Stabilisatoren, organischen Stabilisatoren, Gleitmittel, Farbstoffe, metallischen Pigmente, Metallflitter, metallbeschichtete Partikel, halogenhaltigen Flammschutzmittel, halogenfreien Flammschutzmittel, Schlagzähmodifikatoren, Antistatika, Leitfähigkeitsadditive, Entformungsmittel, optischen Aufheller, natürlichen Schichtsilikate, synthetischen Schichtsilikate oder Gemische der genannten Zusatzstoffe in den Formmassen enthalten sind.

11. Polyamidformmassen gemäß Anspruch 10, **dadurch gekennzeichnet, dass** als Zusatzstoff (E) Ruß und/oder Kohlenstoffnanoröhrchen in Mengen von bis zu 10 Gew.-% in den Formmassen enthalten ist.

12. Verfahren zur Herstellung der Polyamidformmassen gemäß irgendeinem der vorhergehenden Ansprüche 1 bis 11, auf üblichen Compoundieranlagen bei eingestellten Zylindertemperaturen von 280°C bis 320°C, wobei man zunächst den polymeren Anteil aufschmilzt und dann die geschnittenen oder Endlosfasern einträgt.

13. Verfahren zur Herstellung der Polyamidformmassen gemäß irgendeinem der vorhergehenden Ansprüche 1 bis 11, **dadurch gekennzeichnet, dass** man zunächst aus den Komponenten (A) und/oder (B) und den Füllstoffen (C) und/oder (D) und gegebenenfalls dem Zusatzstoff (E) jeweils ein Compound in Granulatform herstellt und diese Granulate anschließend vermischt wobei gegebenenfalls noch weitere Granulatmengen von Komponente (A) und/oder (B) hinzugegeben werden können und die Granulate weiterverarbeitet werden.

14. Verwendung der Formmassen gemäß einem der Ansprüche 1 bis 11 mit Reissfestigkeiten von über 230 MPa (gemessen an Norm-Prüfkörpern gemäß ISO 527), Reissdehnungen von über 1,5% (gemessen an Norm-Prüfkörpern gemäß ISO 527), Wärmeformbeständigkeitswerten HDT/A (1,8 MPa) (gemessen nach ISO 75) von über 242°C, bevorzugt von mindestens 245°C, HDT/C (8 MPa) (gemessen nach ISO 75) von über 150°C, bevorzugt von über 170 °C zur Herstellung von Formkörpern und/oder Hohlkörpern.

15. Herstellung von Formkörpern und/oder Hohlkörpern aus den Polyamidformmassen gemäß einem der Ansprüche 1 bis 11 durch Extrusion, Spritzguss oder Direktcompounding.

16. Formkörper, erhältlich aus den Polyamidformmassen gemäß einem oder mehreren der Ansprüche 1 bis 11.

## Claims

1. High rigid and simultaneously tough, reinforced polyamide moulding materials, **characterized by**: heat distortion temperature values HDT/A (1.8 MPa) (measured according to ISO 75) of more than 242°C, in particular of at least 245°C, HDT/C (8 MPa) of more than 150°C, in particular of more than 170°C, and a polyamide matrix comprising a blend of the following components:
(A) polyamide 66,
(B) copolyamide, build up of
(b₁) 50 to 80 parts by weight of units, in particular 50 to 70 parts by weight of units, which are derived from terephthalic acid (T) in combination with hexamethylenediamine (6) in almost equimolar ratio,
(b₂) 50 to 20 parts by weight of units, in particular 50 to 30 parts by weight of units, which are derived from isophthalic acid (I) in combination with hexamethylenediamine in almost equimolar ratio, the parts by weight of the components (b₁) and (b₂) together giving 100 parts by weight,
and a filler component comprising a mixture of:
(C) glass fibres and
(D) carbon fibres,
the percentages by weight of the components (A) to (D) together giving 100% and the components (A), (B), (C), and (D) fulfilling the following conditions:
| | |
|---|---|
| (A) + (B): | 20 to 60% by weight, |
| weight ratio (A)/(B): | 50/50 to 95/5, |
| (C) + (D): | 40 to 80% by weight, |
| weight ratio,(C)/(D): | 80/20 to 95/5, |
the polyamide moulding materials optionally comprising additives (E) in addition to the components (A) to (D), and the amount thereof being additive to the sum of the components (A) to (D).

2. Polyamide moulding materials according to Claim 1, comprising, as polyamide matrix, a blend of the following components:
(A) polyamide 66,
(B) copolyamide, build up of
(b₁) 50 to 80 parts by weight of units, in particular 50 to 70 parts by weight of units, which are derived from terephthalic acid (T) in combination with hexamethylenediamine (6) in almost equimolar ratio,
(b₂) 50 to 20 parts by weight of units, in particular 50 to 30 parts by weight of units, which are derived from isophthalic acid (I) in combination with hexamethylenediamine in almost equimolar ratio,
the parts by weight of the components (b₁) and (b₂) together giving 100 parts by weight,
and a filler component comprising a mixture of:
(C) glass fibres and
(D) carbon fibres,
the percentages by weight of the components (A) to (D) together giving 100% and the components (A), (B), (C), and (D) fulfilling the following conditions:
| | |
|---|---|
| (A) + (B): | 20 to 39% by weight, |
| weight ratio (A)/(B): | 50/50 to 95/5, |
| (C) + (D): | 61 to 80% by weight, preferably 61 to 75% by weight, particularly preferably 64 to 75% by weight, very particularly preferably 66 to 75% by |
| | weight, |
| weight ratio (C)/(D): | 80/20 to 95/5, |
the polyamide moulding materials optionally comprising additives (E) in addition to the components (A) to (D), and the amount thereof being additive to the sum of the components (A) to (D).

3. Polyamide moulding materials according to either of Claims 1 and 2, **characterized by** tensile strengths of more than 230 MPa (measured on standard test specimens according to ISO 527) and optionally elongations at break of more than 1.5% (measured on standard test specimens according to ISO 527).

4. Polyamide moulding materials according to any of the preceding Claims 1 to 3, **characterized by** a total fibre content of 66 to 74% by weight, a tensile modulus of elasticity of more than 25 500 MPa, preferably of more than 27 000 MPa, particularly preferably of more than 28 000 MPa, and optionally an elongation at break of at least 1.6%.

5. Polyamide moulding materials according to any of the preceding Claims 1 to 4, **characterized by** a total fibre content of 66 to 74% by weight and an elongation at break of at least 1.7%, preferably at least 1.8%.

6. Polyamide moulding materials according to either of the preceding Claims 1 or 3, **characterized by** a total fibre content of 46 to 54% by weight, a tensile modulus of elasticity of more than 18 000 MPa, preferably of more than 19 000 MPa, particularly preferably of more than 20 000 MPa, and optionally an elongation at break of at least 2.0%.

7. Polyamide moulding materials according to either of the preceding Claims 1 or 6, **characterized by** a total fibre content of 46 to 54% by weight and an elongation at break of at least 2.3%, preferably at least 2.5%.

8. Polyamide moulding materials according to any of the preceding Claims 1 to 7, in which the copolyamide 6T/6I (component (B)) has a relative viscosity (RV), measured in 0.5% m-cresol solution, of between 2.3 and 2.7, preferably of between 2.4 and 2.6.

9. Polyamide moulding materials according to one or more of the preceding Claims 1 to 8, in which the glass fibres (component (C)) have a diameter of 5 to 20 µm, preferably of 5 to 10 µm, in particular the cross-section of the glass fibres being round, oval or rectangular, E-glass fibres being preferred.

10. Polyamide moulding materials according to one or more of the preceding Claims 1 to 9, **characterized in that** additives from the group consisting of inorganic stabilizers, organic stabilizers, lubricants, dyes, metallic pigments, metal spangles, metal-coated particles, halogen-containing flameproofing agents, halogen-free flameproofing agents, impact modifiers, antistatic agents, conductivity additives, demoulding agents, optical brighteners, natural layered silicates, synthetic layered silicates or mixtures of said additives are present as additive (E) in the moulding materials.

11. Polyamide moulding materials according to Claim 10, **characterized in that** carbon black and/or carbon nanotubes are present as additive (E) in amounts of up to 10% by weight in the moulding materials.

12. Process for the preparation of the polyamide moulding materials according to any of the preceding Claims 1 to 11, on customary compounding units at set barrel temperatures of 280°C to 320°C, the polymeric fraction first being melted and the cut fibres or continuous filaments then being introduced.

13. Process for the preparation of the polyamide moulding materials according to any of the preceding Claims 1 to 11, **characterized in that** a compound in pellet form is first prepared in each case from the components (A) and/or (B) and the fillers (C) and/or (D) and optionally the additive (E), and these pellets are then mixed, it being possible optionally to add even further amounts of component (A) and/or (B) in pellet form, and the pellets are further processed.

14. Use of the moulding materials according to any of Claims 1 to 11 having tensile strengths of more than 230 MPa (measured on standard test specimens according to ISO 527), elongations at break of more than 1.5% (measured on standard test specimens according to ISO 527), heat distortion temperature values HDT/A (1.8 MPa) (measured according to ISO 75) of more than 242°C, preferably of at least 245°C, HDT/C (8 MPa) (measured according to ISO 75) of more than 150°C, preferably of more than 170°C, for the production of mouldings and/or hollow bodies.

15. Production of mouldings and/or hollow bodies from the polyamide moulding materials according to any of Claims 1 to 11 by extrusion, injection moulding or direct compounding.

16. Mouldings obtainable from the polyamide moulding materials according to one or more of Claims 1 to 11.

## Revendications

1. Masses moulables en polyamide renforcées hautement rigides et en même temps tenaces, **caractérisées par** des valeurs de résistance à la déformation à chaud HDT/A (1,8 MPa) (mesurées suivant ISO 75) supérieures à 242°C, de préférence au moins égales à 245°C, et HDT/C (8 MPa) supérieures à 150°C, notamment supérieures à 170°C, ainsi que par une matrice en polyamide contenant un mélange des composants suivants :
(A) du polyamide 66,
(B) un copolyamide constitué de
(b₁) 50 à 80 parties en poids de motifs, notamment de 90 à 70 parties en poids de motifs dérivés de l'acide téréphtalique (T) en combinaison avec de l'hexaméthylène diamine (6) selon un ratio sensiblement équimolaire,
(b₂) 50 à 20 parties en poids de motifs, notamment de 50 à 30 parties en poids de motifs dérivés de l'acide isophtalique (I) en combinaison avec de l'hexaméthylène diamine selon un ratio sensiblement équimolaire,
la somme des parties en poids des composants (b₁) et (b₂) étant égale à 100 parties en poids,
et d'un composant de charge contenant un mélange :
(C) de fibres de verre, et
(D) de fibres de carbone,
la somme des pourcentages en poids des composants (A) à (D) étant égale à 100% et les composants (A), (B), (C) et (D) satisfaisant les conditions suivantes :
(A) + (B) : 20 à 60% en poids,
ratio en poids (A)/(B) : 50/50 à 95/5,
(C) + (D) : 40 à 60% en poids,
ratio en poids (C)/(D) : 80/20 à 95/5,
les masses moulables en polyamide contenant le cas échéant, en plus des composants (A) à (D), des additifs (E) dont la quantité s'ajoute à la somme des composants (A) à (D).

2. Masses moulables en polyamide selon la revendication 1 en tant que matrice en polyamide contenant un mélange des composants suivants :
(A) du polyamide 66,
(B) un copolyamide constitué de
(b₁) 50 à 80 parties en poids de motifs, notamment de 50 à 70 parties en poids de motifs dérivés de l'acide téréphtalique (T) en combinaison avec de l'hexaméthylène diamine (6) selon un ratio sensiblement équimolaire,
(b₂) 50 à 20 parties en poids de motifs, notamment de 50 à 30 parties en poids de motifs dérivés de l'acide isophtalique (I) en combinaison avec de l'hexaméthylène diamine selon un ratio sensiblement équimolaire,
la somme des parties en poids des composants (b₁) et (b₂) étant égale à 100 parties en poids,
et en tant que composant de charge contenant un mélange :
(C) de fibres de verre, et
(D) de fibres de carbone,
la somme des pourcentages en poids des composants (A) à (D) étant égale à 100% et les composants (A), (B), (C) et (D) satisfaisant les conditions suivantes :
(A) + (B) : 20 à 39% en poids,
ratio en poids (A)/(B) : 50/50 à 95/5,
(C) + (D) : 61 à 80% en poids, de préférence 61 à 75% en poids, de façon particulièrement préférée 64 à 75% en poids, de façon tout particulièrement préférée 66 à 75% en poids,
ratio en poids (C)/(D) : 80/20 à 95/5,
les masses moulables en polyamide contenant le cas échéant, en plus des composants (A) à (D), des additifs (E) dont la quantité s'ajoute à la somme des composants (A) à (D).

3. Masses moulables en polyamide selon la revendication 1 ou la revendication 2, **caractérisées par** des valeurs de résistance à la traction supérieures à 230 MPa (mesurées sur des éprouvettes normalisées suivant ISO 527) et le cas échéant des valeurs d'élongation à la rupture supérieures à 1,5% (mesurées sur des éprouvettes normalisées suivant ISO 527).

4. Masses moulables en polyamide selon l'une des revendications 1 à 3 précédentes, **caractérisées par** une teneur totale en fibres de 66 à 74% en poids, par un module d'élasticité en traction supérieur à 25500 MPa, de préférence supérieur à 27000 MPa, de façon particulièrement préférée supérieur à 28000 MPa, et le cas échéant par une élongation à la rupture d'au moins 1,6%.

5. Masses moulables en polyamide selon l'une des revendications 1 à 4 précédentes, **caractérisées par** une teneur totale en fibres de 66 à 74% en poids et par une élongation à la rupture d'au moins 1,7%, de préférence au moins 1,8%.

6. Masses moulables en polyamide selon l'une des revendications 1 à 3 précédentes, **caractérisées par** une teneur totale en fibres de 46 à 54% en poids, par un module d'élasticité en traction supérieur à 18000 MPa, de préférence supérieur à 19000 MPa, de façon particulièrement préférée supérieur à 20000 MPa, et le cas échéant par une élongation à la rupture d'au moins 2,0%.

7. Masses moulables en polyamide selon l'une des revendications 1 ou 6 précédentes, **caractérisées par** une teneur totale en fibres de 46 à 54% en poids et une élongation à la rupture d'au moins 2,3%, de préférence au moins 2,5%.

8. Masses moulables en polyamide selon l'une des revendications 1 à 7 précédentes, dans lesquelles le copolyamide 6T/61 (composant (B)) présente une viscosité relative (VR), mesurée dans une solution à 0,5% de m-crésol, dans la plage de 2,3 à 2,7, de préférence de 2,4 à 2,6.

9. Masses moulables en polyamide selon l'une ou plusieurs des revendications 1 à 8 précédentes, dans lesquelles les fibres de verre (composant (C)) présentent un diamètre allant de 5 à 20 *µ*m, de préférence de 5 à 10 *µ*m, les fibres de verre ayant notamment une section ronde, ovale ou rectangulaire, des fibres de verre E étant préférées.

10. Masses moulables en polyamide selon l'une ou plusieurs des revendications 1 à 9 précédentes, **caractérisées en ce que**, comme additif (E), des substances du groupe des stabilisateurs inorganiques, stabilisateurs organiques, lubrifiants, colorants, pigments métalliques, paillettes métalliques, particules métallisées, agents ignifugeants halogénés, agents ignifugeants sans halogène, modificateurs de résilience au choc, agents antistatiques, additifs de conductibilité, agents de démoulage, azurants optiques, silicates lamellaires naturels, silicates lamellaires synthétiques, ou des mélanges des additifs précités sont contenus dans les masses moulables.

11. Masses moulables en polyamide selon la revendication 10, **caractérisées en ce que**, comme additif (E), du noir de fumée et/ou des nanotubes de carbone sont contenus dans les masses moulables en des quantités allant jusqu'à 10% en poids.

12. Procédé de production des masses moulables en polyamide selon l'une quelconque des revendications 1 à 11 précédentes dans des systèmes de compoundage usuels à des températures de cylindres réglées à des valeurs dans la plage de 280°C à 320°C, en faisant fondre en premier la partie polymère et ensuite en y incorporant les fibres coupées ou sans fin.

13. Procédé de production des masses moulables en polyamide selon l'une quelconque des revendications 1 à 11 précédentes, **caractérisé en ce que** l'on prépare d'abord un compound sous forme granulée de chacun des composants (A) et/ou (B) et des charges (C) et/ou (D) et le cas échéant de l'additif (E) puis on mélange ces granulés, des quantités supplémentaires des granulés des composants (A) et/ou (B) pouvant le cas échéant y être ajoutées, et les granulés sont retransformés.

14. Utilisation des masses moulables selon l'une des revendications 1 à 11, ayant des valeurs de résistance à la traction supérieures à 230 MPa (mesurées sur des éprouvettes normalisées suivant ISO 527), des valeurs d'élongation à la rupture supérieures à 1,5% (mesurées sur des éprouvettes normalisées suivant ISO 527), des valeurs de résistance à la déformation à chaud HDT/A (1,8 MPa) (mesurées suivant ISO 75) supérieures à 242°C, de préférence au moins égales 245°C, et HDT/C (8 MPa) (mesurées suivant ISO 75) supérieures à 150°C, de préférence supérieures à 170°C, pour fabriquer des articles moulés et/ou des corps creux.

15. Fabrication d'articles moulés et/ou de corps creux à partir des masses moulables en polyamide selon l'une des revendications 1 à 11 par extrusion, par injection ou par compoundage direct.

16. Articles moulés pouvant être obtenus à partir des masses moulables en polyamide selon l'une ou plusieurs des revendications 1 à 11.
